# EUROPEAN PATENT APPLICATION

(11) **EP 3 987 964 A1**
(43) Date of publication of application: **27.04.2022**
(21) Application number: 21200794.2
(22) Date of filing: 04.10.2021
(51) Int. Cl.: A41B 11/00, A41B 11/12, B29C 65/18, B29C 65/78, B29C 65/00, B29L 31/50

(54) **MANUFACTURING METHOD OF NONSLIP SOCKS**

(30) Priority: 06.10.2020 KR 20200128683
(71) Applicant: We foot Technology Inc., Bucheon-Si, Gyeonggi-do, 14693 (KR)
(72) Inventor: KIM, Tae Hyo, 14693 Bucheon-Si, Gyeonggi-do (KR)
(74) Representative: M. Zardi & Co S.A.

(57) **Abstract**

The present invention relates to a method for manufacturing non-slip socks, which arranges and presses a fabric to which a grapping member is bonded at the inside of the sock and then arranges and presses the fabric to which the grapping member is bonded at the outside of the sock. Here, accuracy of positions of the grapping members at the inside and the outside of the sock may increase by using a unit for guiding a position of the fabric, and productivity may improve.

A method for manufacturing non-slip socks, which arranges a gripping member (2) on a surface of a sock main body (1) fitted to a mold and presses and bonds the gripping member (2) to the surface of the sock main body (1) by using a press, the method comprising:

an inside setting process of preparing a mold (40) in which a fabric guide groove (43a), in which a fabric (3) onto which a grapping member is bonded is to be seated, is formed and then seating the fabric (3) in the fabric guide groove (43a), wherein the grapping member (2) faces upward;

a sock installation process of fitting the sock main body (1) to the mold (40) on which the fabric (3) is seated so that the grapping member (2) faces an inner circumferential surface of the sock main body (1);

an inside press process of preparing an one side press device (51) comprising a lower mold (50a) configured to support a lower portion of the mold (40), an upper mold (50b) spaced upward from the lower mold (50a), a heating wire (50c) installed in one of the lower mold (50a) and the upper mold (50b), and an actuator (50d) connected to the upper mold (50b), arranging one side of the mold (40) between the lower mold (50a) and the upper mold (50b), and then allowing the upper mold (50b) to move downward to heat and press the sock main body (1), so that the grapping member (2) at the inside of the sock main body (1) is bonded to the inside of the sock main body (1);

an outside setting process of preparing a guide device (60) comprising a movable frame (61) that moves upward toward the mold (40), wherein a fabric guide member (62) in which a guide hole (62a) configured to guide an arranged position of the fabric (3) on the sock main body (1) fitted to the mold (40) is formed is installed on the movable frame (61), and then arranging the fabric guide member (62) above the sock main body (1) and inputting another fabric (3) to which the grapping member (2) is bonded to the guide hole (62a), so that the grapping member (2) is disposed below the fabric (3); and

an outside press process of preparing a the other side press device (52) comprising a lower mold (50a) configured to support the lower portion of the mold (40) and an upper mold (50b) spaced upward from the lower mold (50a), comprising a heating wire (50c) installed therein, and connected with an actuator to vertically move, arranging one side of the mold (40) between the lower mold (50a) and the upper mold (50b), and then allowing the upper mold (50b) to move downward to heat and press the grapping member (2) on the sock main body (1), thereby bonding the grapping member (2) disposed on an outer surface of the sock main body (1) to the outer surface of the sock main body (1),

wherein the mold (40) comprises:

a connection plate (41);

a seat member (42) installed on the connection plate (41) and on which the fabric (3) to which the gripping member (2) is bonded is seated; and

an elevation member (43) in which a fabric guide groove (43a) through which the seat member (42) passes is formed therein and having a lower portion connected with the connection plate (41) through an elastic member (44) to vertically move by an upper pressure, so that the fabric (3) is not deviated from the fabric guide groove (43a) in a state in which the fabric (3) is inserted to the fabric guide groove (43a) after the inside setting process is finished.

## Description

### CROSS-REFERENCE TO RELATED APPLICATIONS

This U.S. non-provisional patent application claims priority under 35 U.S.C. § 119 of Korean Patent Application No. 10-2020-0128683, filed on Oct 6th, 2020, the entire contents of which are hereby incorporated by reference.

### TECHNICAL FIELD

The present invention relates to a method for manufacturing non-slip socks in which a gripping member that is a non-slip member is bonded to each of the inside and the outside of the sock, and more particularly, to a method for manufacturing non-slip socks, which is capable of exactly maintaining a state in which the gripping member at the inside and the outside of the sock are alternately arranged and increasing productivity.

### BACKGROUND ART

A foot is a body part for maintaining a balance of a human body and supporting a body weight to absorb an impact and through which numerous blood vessels and nerves pass.

As a unit for protecting the foot, a footwear such as stockings, tights, outer socks, and socks is used.

The footwear may have a basic protection function and an additional function such as exercise performance improvement, injury prevention, and foot odor reduction through sweat absorption.

When the general footwears are used, slippage may be generated between an inner surface of the footwear and a sole or between an outer surface of the footwear and an inner surface of a shoe due to a low friction coefficient of fiber materials selected for the footwears.

For example, when a woman wearing the footwear such as stockings and outer socks moves while wearing high heels (shoes) in which a heel is high, a weight is biased to a front side, and a force is concentrated on a toe to generate pain and stiffness in an instep, an ankle, and even a muscle of a thigh, thereby generating pain and fatigue of the foot.

Also, slippage is generated between the stocking and the foot due to the weight and a forward force for each step when walking, and the slippage between the stocking and the foot applies an impact to the toe. This impact is continuously generated during walking.

Also, in case that a rear foot is slipped, as the rear foot is deviated to the outside further when wearing the high heels, the ankle may be easily bent, and walking may be unstable to cause a sprain damage on the ankle.

According to the report of Health Insurance Review and Assessment Service, there were 1.6 million ankle sprain patients in the year of 2010, and the number of the ankle sprain patients was increased to 1.86 million in the year of 2014.

Also, in terms of sports activity such as running and skating, when a wearer changes a speed or a direction or suddenly starts or stops during the sports activity, a phenomenon in which a foot of the wearer is slipped in a footwear main body is generated, and a phenomenon in which the footwear main body is slipped in a shoe is generated.

These phenomena are generated because of an insufficient gripping capability between the foot ant he footwear main body and between the footwear main body and the shoe.

As described above, shortage of the sufficient gripping capability causes injuries on an ankle or a knee when a sportsman is slipped.

In order to prevent the injuries caused by the slippage phenomenon and improve an exercise performance, a patent "Non slip socks for sports" (Korean Patent Registration No. 10-1686547, patent document 1) and a patent "Non slip insole for sports" (Korean Patent Registration No. 10-1638404, patent document 2) are disclosed.

The above patent documents 1 and 2 relate to a cross-sectional structure of a material for strengthening a non-slip function in a sock or an insole and a manufacturing method thereof.

As another technology related to the gripping material, a patent "Construction of a gripping fabric" (US Patent Registration No. 9,498,003, patent document 3) discloses a technology of forming a non-slip material on each of an inner surface and an outer surface of a footwear main body such that the non-slip material on the inner surface and the non-slip material on the outer surface are overlapped or coincided with each other on a plane to maximize an exercise performance.

The patent document 3 relates to a technology for arranging materials for strengthening the non-slip function, and the technology maximizes a friction force at a contact portion between the footwear main body and the foot and between the footwear main body and the shoe based on each point at which slippage is generated through overlapping or integration.

When reviews of users who substantially purchases and uses a product disclosed in the patent document 3 are analyzed, it is shown that the slippage prevention function improves, but excessive non-slip function causes injuries on the foot of the wearer.

This phenomenon is generated such that when the foot of the wearer and the non-slip material of the sock are not in close contact with each other (when close contact between the sole and the inner non-slip material of the footwear main body and close contact between the inside of the shoe and the outer non-slip material of the footwear main body at the same point are performed), a force applied to a skin extremely increases because a weight of the wearer is transferred to the same point when the weight is applied to the corresponding point.

Here, as the non-slip material has an excellent non-slip performance, an unbearable force is applied to the skin.

Particularly, since a side skin adjacent to the sole has a weak skin in the foot of the wearer, an injury may be further easily generated in the side skin.

In addition, the foot may feel foreign body sensation when wearing the footwear main body in which the non-slip material is formed by a method such as coating to protrude at the same point of the outside and the inside of the footwear main body, and the foreign body sensation is changed into pressing sensation as a pressure is continuously applied when wearing for a long time. Here, this foreign body sensation and the pressing sensation further increases as a thickness of the sock decreases to cause sore and fever on the skin of the wearer, which contacts the non-slip material, and even generate a blister and an injury.

In order to resolve the above-described limitation, the present applicant applied for and registered with a patent "Non slip foot wear with separating cushion part" (Korean Patent Registration No. 10-2002633, patent document 4).

The patent document 4 may prevent a skin damage by preventing an excessive non-slip function exceeding a required proper non-slip function as a gripping member is provided on each of an inside and an outside of a bottom of a sock in such a manner that the gripping members disposed at the inside and the outside are alternately arranged on a plane instead of being coincided with each other.

As a method for bonding a member having the above-described non-slip function to the surface of the sock, a patent "Construction of a gripping fabric" (Korean Patent Publication No. 10-2013-0109131, patent document 5) discloses a technology of arranging a gripping member attached to a release paper on each of upper and lower portion with respect to a surface of a sock and then pressing the gripping member simultaneously from above and below to bond the gripping member to a sock main body.

In case of the patent document 5, since the gripping members are disposed at the substantially same position, the gripping members may receive a proper pressure when heated and pressed by using a press and be bonded to the sock main body.

However, when the method as in the patent document 5 is applied to a case in which the gripping members are alternately arranged as in the patent document 4, a space opposite to a portion contacting the press may be in a spaced state or may not receive a sufficient pressure, and thus bonding through the press is not sufficiently performed.

When a temperature or a pressure of the press or a bonding time increases in order to resolve the above-described limitation, the sock main body may be damaged by heat.

Furthermore, when the gripping is applied to a thin sock except for a thick sport sock, the sock may be easily damaged according to a temperature, a pressure, and a time of the press. Thus, the method disclosed in the patent document 5 may not be substantially used.

In addition, although the gripping members disposed at the inside and the outside of the sock are not required to completely overlap each other in the method disclosed in the patent document 5, the gripping members disposed at the inside and the outside of the sock, which are not in overlap with each other as in the patent document 4, are required to be precisely set in position. However, the patent document 5 does not disclose a technical feature satisfying the feature of precisely setting the positions of the gripping members.

In recent years, demand for the sock of the patent document 4 increases in various sports fields in addition to the soccer and even increases in a field of general socks.

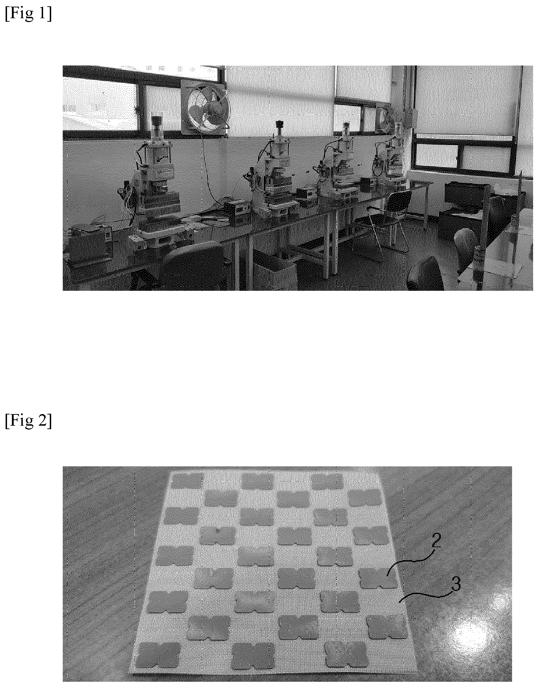

FIG. 1 is a photograph showing press devices arranged in a factory to manufacture the sock disclosed in the patent document 4. A worker sits in front of each press to manually and directly arrange and work the fabric with the gripping member bonded.

Because of the manual work, supply may not keep up with demand, and a selling price of the sock may increase.

### [Prior art document]

### [Patent document]

(Patent document 1) KR 10-1686547 (20161208)
(Patent document 2) KR 10-1638404 (20160705)
(Patent document 3) US 9,498,003 (20161122)
(Patent document 4) KR 10-2002633 (2019.07.16)
(Patent document 5) KR 10-2013-0109131 (2013.10.07)

### DISCLOSURE OF THE INVENTION

### TECHNICAL PROBLEM

The present invention provides an apparatus for manufacturing non-slip socks, which improves accuracy of positions of gripping members disposed at an inside and an outside of a sock and increases a production speed when a sock in which the gripping members disposed at the inside and the outside thereof are alternately arranged as in the patent document 4 is manufactured, in order to resolve typical technical limitations.

Particularly, as a groove for guiding a position of the fabric (to which the gripping member is bonded) to be bonded to the inside of the sock is formed in a mold rotating along the rotation table, and a guide device for guiding a position of the fabric to be bonded to the outside of the sock is provided at one side of a circumference of the rotation table, the accuracy of bonding positions of the fabric on the inside and the outside of the sock may improve.

Also, as a plurality of press devices for heating and pressing the inside and the outside of the sock are consecutively arranged to sequentially perform an initial temporary bonding, a cooling, and then a main bonding, a phenomenon of the sock main body damaged by heat may be minimized.

in addition, as a fabric guide groove is formed in an elevation member moving upward by elasticity, the fabric may not be deviated from the fabric guide groove in a state in which the fabric is inserted to the fabric guide groove in a sock installation process after an inside setting process is finished.

### TECHNICAL SOLUTION

In order to achieve the objects, a method for manufacturing non-slip socks according to the present invention, which arranges a gripping member (2) on a surface of a sock main body (1) fitted to a mold and presses and bonds the gripping member (2) to the surface of the sock main body (1) by using a press, includes: an inside setting process of preparing a mold (40) in which a fabric guide groove (43a), in which a fabric (3) onto which a grapping member is bonded is to be seated, is formed and then seating the fabric (3) in the fabric guide groove (43a), wherein the grapping member (2) faces upward; a sock installation process of fitting the sock main body (1) to the mold (40) on which the fabric (3) is seated so that the grapping member (2) faces an inner circumferential surface of the sock main body (1); an inside press process of preparing an one side press device (51) including a lower mold (50a) configured to support a lower portion of the mold (40), an upper mold (50b) spaced upward from the lower mold (50a), a heating wire (50c) installed in one of the lower mold (50a) and the upper mold (50b), and an actuator (50d) connected to the upper mold (50b), arranging one side of the mold (40) between the lower mold (50a) and the upper mold (50b), and then allowing the upper mold (50b) to move downward to heat and press the sock main body (1), so that the grapping member (2) at the inside of the sock main body (1) is bonded to the inside of the sock main body (1); an outside setting process of preparing a guide device (60) including a movable frame (61) that moves upward toward the mold (40), wherein a fabric guide member (62) in which a guide hole (62a) configured to guide an arranged position of the fabric (3) on the sock main body (1) fitted to the mold (40) is formed is installed on the movable frame (61), and then arranging the fabric guide member (62) above the sock main body (1) and inputting another fabric (3) to which the grapping member (2) is bonded to the guide hole (62a), so that the grapping member (2) is disposed below the fabric (3); and an outside press process of preparing a the other side press device (52) including a lower mold (50a) configured to support the lower portion of the mold (40) and an upper mold (50b) spaced upward from the lower mold (50a), including a heating wire (50c) installed therein, and connected with an actuator to vertically move, arranging one side of the mold (40) between the lower mold (50a) and the upper mold (50b), and then allowing the upper mold (50b) to move downward to heat and press the grapping member (2) on the sock main body (1), thereby bonding the grapping member (2) disposed on an outer surface of the sock main body (1) to the outer surface of the sock main body (1).

In the above-described configuration, a plurality of grapping members (2) may be arranged with a predetermined gap in a horizontal direction and a vertical direction on each of the fabrics (3) installed on the inside of the sock main body (1) and the fabrics (3) installed on the outside of the sock main body (1) on a plane, one group of grapping members (2) forming one horizontal line may be arranged alternately with one group of grapping members (2) adjacent thereto in the vertical direction, and the gripping members (2) disposed at the inside of the sock main body (1) and the gripping members (2) disposed at the outside of the sock main body (1) may be alternately arranged on the plane.

Also, the one side press device (51) may include a first one side press device (51a) and a second one side press device (51b), which are spaced apart from each other, and the inside press process may firstly temporarily bond the grapping member (2) to an inner circumferential surface of the sock main body (1) in the first one side press device (51a) and then secondarily completely bond the grapping member (2) to the inner circumferential surface of the sock main body (1) in the second one side press device (51b).

Also, the the other side press device (52) may include a first the other side press device (52a) and a second the other side press device (52b), which are spaced apart from each other, and the outside press process may firstly temporarily bond the grapping member (2) to an outer circumferential surface of the sock main body (1) in the first the other side press device (52a) and then secondarily completely bond the grapping member (2) to the outer circumferential surface of the sock main body (1) in the second the other side press device (52b).

Furthermore, the mold (40) may be configured such that the fabric (3) is not deviated from a fabric guide groove (43a) in a state in which the fabric (3) is inserted to the fabric guide groove (43a) after the inside setting process is finished because the fabric guide groove 43a is formed in an elevation member 43 moving upward by elasticity.

### ADVANTAGEOUS EFFECTS

According to the present invention, when the sock in which the gripping members disposed on the inside and the outside thereof are alternately arranged as disclosed in the patent document 4 is manufactured, the accuracy of the positions of the gripping members disposed on the inside and the outside may increase, and the production speed may improve.

More specifically, when the gripping member of the inside of the sock and the gripping member of the outside of the sock are separately bonded by using the press, the accuracy of the bonding positions of the fabrics on the inside and the outside of the sock may increase by forming the groove for guiding the position of the fabric (to which the gripping member is bonded) to be bonded to the inside of the sock and including the guide device for guiding the position of the fabric to be bonded to the outside of the sock at one side of the circumference of the rotation table.

Also, as the plurality of press devices for heating and pressing the inside and the outside of the sock are consecutively arranged to sequentially perform the initial temporary bonding, the cooling, and then the main bonding, the phenomenon of the sock main body damaged by heat may be minimized.

In addition, as the fabric guide groove is formed in the elevation member moving upward by elasticity, the fabric may not be deviated from the fabric guide groove in the state in which the fabric is inserted to the fabric guide groove in the sock installation process after the inside setting process is finished.

### BRIEF DESCRIPTION OF THE DRAWINGS

FIG. 1 is a photograph showing a typical apparatus for manufacturing non-slip socks.
FIG. 2 is a photograph showing a state of a fabric to which a gripping member is bonded according to the present invention.
FIG. 3 is a cross-sectional view illustrating a state of the gripping member from which the fabric is removed.
FIG. 4 is a photograph showing one example of a mold according to the present invention.
FIG. 5 is a photograph showing a state of inputting the fabric to a fabric guide groove of the mold according to the present invention.
FIG. 6 is a photograph showing a state of fitting a sock main body to the mold after the state of FIG. 5.
FIG. 7 is a photograph showing a state of performing a pressing operation after the state of FIG. 6.
FIG. 8 is a photograph showing a state of arranging the fabric on the outside of the sock main body by using a guide device.
FIG. 9 is a partially-cut perspective view illustrating a manufacturing apparatus to achieve the present invention.
FIG. 10 is a plan view illustrating the manufacturing apparatus of FIG. 9.
FIG. 11 is an exploded perspective view illustrating a specific configuration of the mold according to the present invent.
FIG. 12 is a cross-sectional view illustrating another embodiment of the mold.
FIG. 13 is a cross-sectional view sequentially illustrating a process of bonding a gripping member to the inside of the sock main body.
FIG. 14 is a cross-sectional view sequentially illustrating a process of bonding the gripping member to the outside of the sock main body.

### MODE FOR CARRYING OUT THE INVENTION

The present invention relates to a method for manufacturing non-slip socks, which fits a sock main body 1 to a mold, arranges a gripping member 2 on a surface of the sock main body 1, and then presses and bonds the gripping member 2 to the surface of the sock main body 1 by using a press.

FIG. 2 is a photograph showing a state in which the gripping member 2 is bonded to a fabric 3.

The gripping member 2 may be made of various materials for exhibiting a non-slip function. Preferably, the gripping member 2 may be made of a wet-type polyurethane sheet.

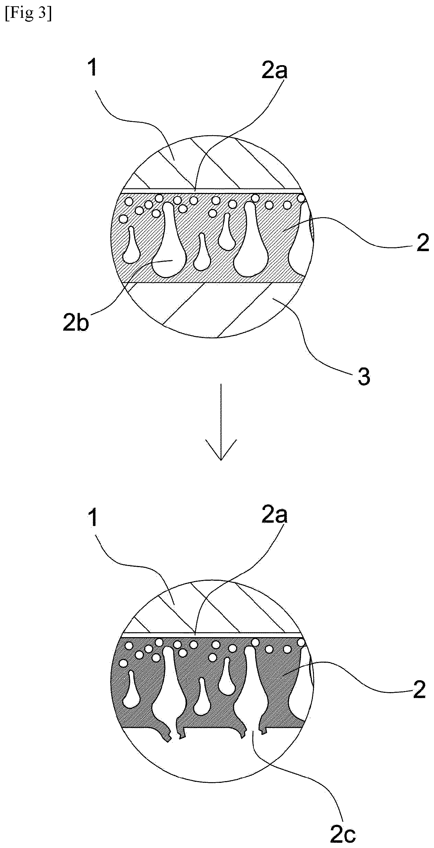

The wet-type polyurethane sheet is disclosed in the patent document 4 and illustrated in FIGS. 2 and 3.

Specifically, a gripping surface may be formed: by manufacturing the wet-type polyurethane sheet by using one of the fabric 3 or a polyester film as a carrier and then removing the carrier to obtain a surface from which the carrier is removed and use the surface as the gripping surface; by impregnating and coating a non-woven fabric with a polyurethane resin in a process of manufacturing the wet-type polyurethane sheet and then removing a surface skin of sheet manufactured after performing a process for solidifying and removing DMF to obtain a surface from which the surface skin is removed and use the surface as the gripping surface; or by manufacturing the wet-type polyurethane sheet by using one of the fabric 3 or the polyester film as a carrier and then removing a surface layer at an opposite surface of the carrier by using a sandpaper to use the surface as the gripping surface.

The polyurethane sheet manufactured by the above method has a structure, in which numerous pores are formed therein, external moisture is introducible to a space around the frame, and all or a portion of the introduced moisture is dischargeable to a bottom surface or a wall surface, and form a gripping surface by forming a micro-uneven surface through the above method such as carrier removal, surface skin removal, or sandpaper removal.

The gripping member 2 in FIG. 3 has a structure in which a column cell 2b having a roly-poly toy shape is formed therein.

In addition, the gripping member 2 has a structure in which a non-slip groove 2c communicating with the column cell 2b is formed as a portion of the column cell 2b is torn when the carrier such as the fabric 3 is detached.

A feature of forming the gripping member 2 having a predetermined pattern on the fabric 3 may be performed by using a roll cutter.

In addition, a hot-melt adhesive 2a is applied to the exposed surface of the gripping member 2 so that bonding using a heat press is easily performed and bonded to the sock main body 1 when pressure and heat is transferred through the heat press.

In addition, in a finishing process of the roll cutter, the fabric is cut into a predetermined gap to have a rectangular shape as in FIG. 2.

Referring to FIG. 2, three or four gripping members are repeated in a direction from a left side to a right side on the picture.

In this case, as schematically illustrated in FIG. 3, the fabric 3 cut in the roll cutter is manufactured such that the fabric in which four gripping members are disposed on an end thereof and the fabric in which three gripping members are disposed on an end thereof are continuously and alternately manufactured.

In this case, when the fabric in which four gripping members are disposed on the end thereof is arranged and bonded to an inside of the sock, the in which three gripping members are disposed on the end thereof is arranged and bonded to an outside of the sock.

Since a bonding state between the fabric 3 and the gripping member 2 is easily broken when a person holds and tears by hands, when the fabric 3 is pulled by hands in a state in which the gripping member 2 is bonded to the sock main body 1 through the hot-melt adhesive and the press, the gripping member 2 and the fabric 3 are easily detached from each other.

Hereinafter, an apparatus for manufacturing non-slip socks of the present invention, which manufactures non-slip socks by bonding the gripping member on the fabric to the socks will be described.

### 1. Inside setting process

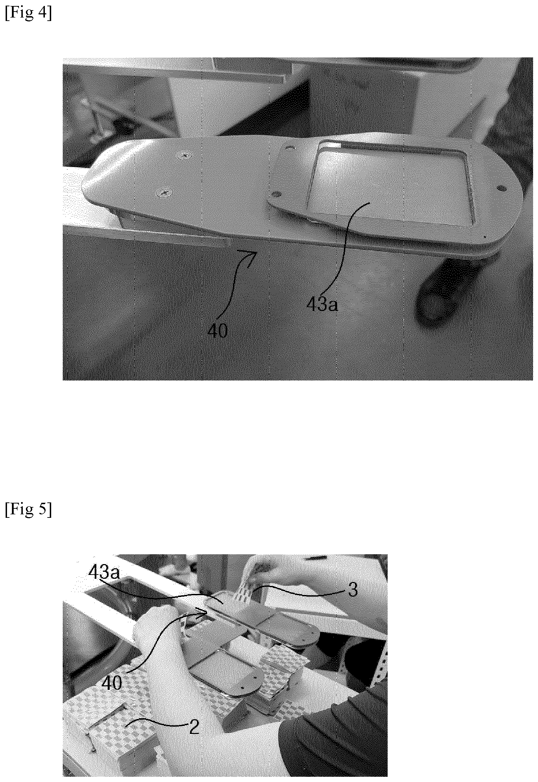

As illustrated in FIG. 4, a mold 40 in which a fabric guide groove 43a in which the fabric 3 with the gripping member 2 bonded is seated is prepared.

Thereafter, as illustrated in FIG. 5, the fabric 3 is seated in the fabric guide groove 43a, and the gripping member 2 faces upward.

### 2. Sock installation process

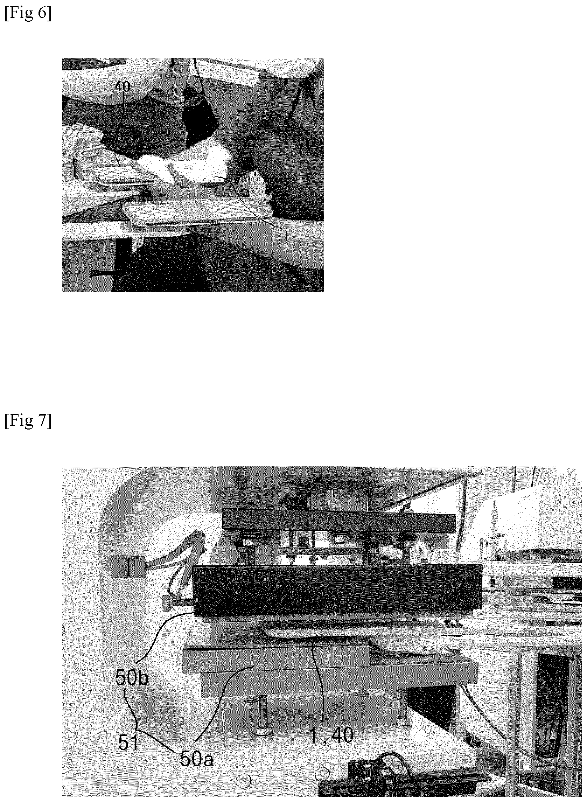

As illustrated in FIG. 6, the sock main body 1 is fitted to the mold 40 on which the fabric 3 is seated, so that the inner circumferential surface of the sock main body 1 faces the gripping member 2.

### 3. Inside press process

As illustrated in FIG. 7, an one side press device 51 including a lower mold 50a for supporting a lower portion of the mold 40, an upper mold 50b spaced upward from the lower mold 50a, a heating wire installed on one of the lower mold 50a and the upper mold 50a, and an actuator connected to one of the lower mold 50a and the upper mold 50a is prepared, and then the gripping member 2 inside the sock main body 1 is bonded to the inside of the sock main body 1 such that one side of the mold 40 is disposed between the lower mold 50a and the upper mold 50b, and then the upper mold 50b moves downward to heat and press the sock main body 1.

Although an example in which the actuator is connected to the upper mold 50b, and the heating wire is attached to the inside of the upper mold 50b is illustrated in the drawing, as the actuator and the heating wire may be connected to the lower mold 50a, the two molds may be simultaneously operated from the top and the bottom.

More preferably, the one side press device 51 includes a first one side press device 51a and a second one side press device 51b, which are spaced apart from each other, and the inside press process is performed such that the gripping member 2 and an inner circumferential surface of the sock main body 1 is firstly temporarily bonded in the first one side press device 51a, a cooling time elapses while the mold 40 moves to the second one side press device 51b, and then the gripping member 2 and the inner circumferential surface of the sock main body 1 is secondarily completely bonded in the second one side press device 51b.

### 4. Outside setting process

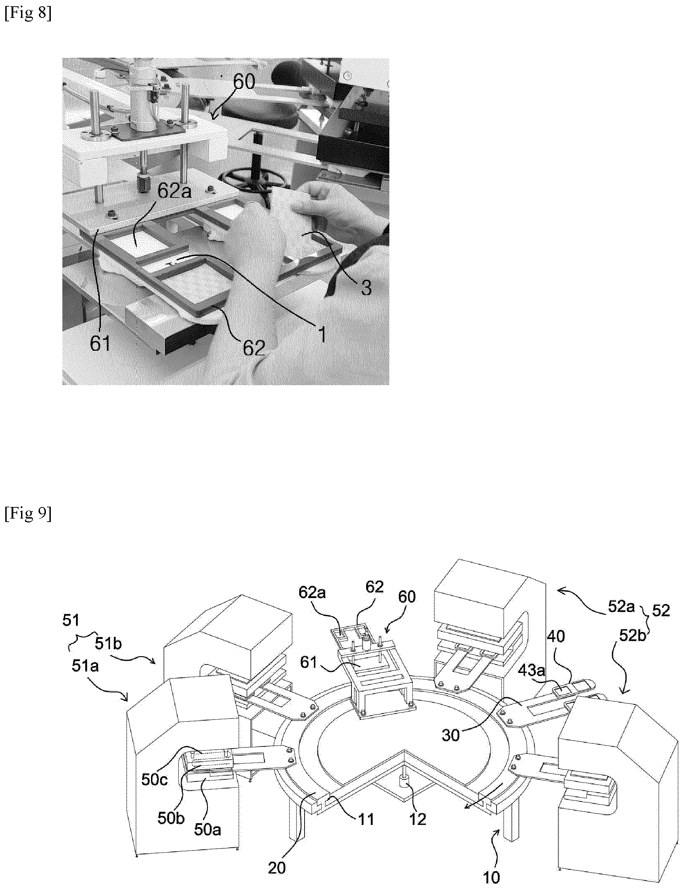

As illustrated in FIG. 8, a guide device 60 including a movable frame 61 moving vertically toward the mold 40 is prepared, wherein a fabric guide member 62, in which a guide hole 62a for guiding an arrangement position of the fabric 3 on the sock main body 1 fitted to the mold 40 is formed, is installed on the movable frame 61. Thereafter, the fabric guide member 62 is disposed above the sock main body 1, and the separate fabric 3 with the gripping member 2 bonded is inputted to the guide hole 62a, so that the gripping member 2 is disposed below the fabric 3.

Alternatively, a mark caused by the pressing may be generated in a surface because the sock main body 1 firstly receives heat and pressure through the inside press process, and this pressing mark may be used as a guide so that the gripping member 2 is disposed below the fabric 3.

In this case, however, since the fabric 3 is positioned by a manual work, accuracy may decrease, and the position may be changed by static electricity and wind, it will be much better to use the guide device 60.

### 5. Outside press process

The other side press device 52 including a lower mold 50a supporting a lower portion of the mold 40 and an upper mold 50b spaced upward from the lower mold 50a, including a heating wire 50c installed therein, and connected with the actuator to vertically move is prepared. Thereafter, one side of the mold 40 is positioned between the lower mold 50a and the upper mold 50b, and then the upper mold 50b moves downward to heat and press the gripping member disposed on the sock main body 1 so that the gripping member 2 is bonded to an outer surface of the sock main body 1.

A configuration and a press state of the the other side press device 52 may be substantially the same as those of FIG. 7.

More preferably, the the other side press device 52 may include a first the other side press device 52a and a second the other side press device 51b, which are spaced apart from each other, and the outside press process may be performed such that the gripping member 2 and an outer circumferential surface of the sock main body 1 are firstly temporarily bonded in the first the other side press device 52a, the fabric 3 disposed on the outer circumferential surface of the sock main body 1 is separated from the gripping member 2, and then the gripping member 2 and the outer circumferential surface of the sock main body 1 are secondarily completely bonded in the second the other side press device 52b.

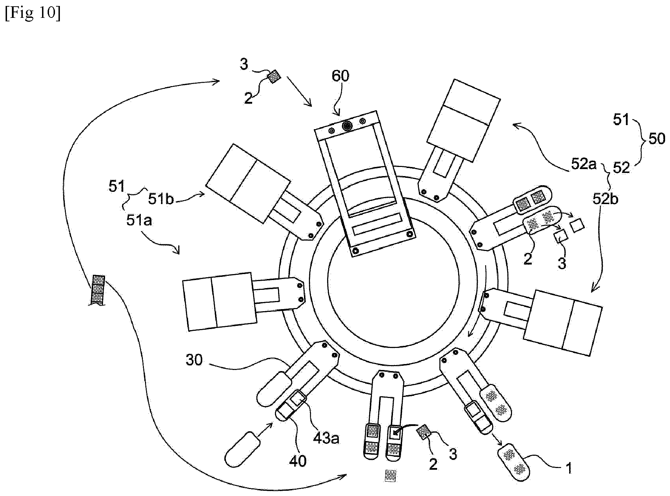

FIGS. 9 and 10 illustrate the manufacturing apparatus for achieving the above-described configuration.

The manufacturing apparatus includes a support frame 10, a rotation table 20, a mold connection member 30, a mold 40, a press device 50, and a guide device 60.

As illustrated in FIGS. 9 and 10, the support frame 10 includes an upper plate having a circular shape, and a circular guide groove 11 in which the rotation table 20 is seated is formed in the upper table.

In addition, a driving motor 12 is installed at one side of a lower portion of the support frame 10.

The rotation table 20 has one side connected with the driving motor 12 and an upper portion seated in the guide groove 11 and rotates along the guide groove 11 by an operation of the driving motor.

Although an arrangement state between the rotation table 20 and the driving motor 12 in the drawing is simply illustrated for easy understanding, a structure and a connection relationship between the rotation table 20 and the driving motor 12 may be configured by various well-known structures allowing the rotation table 20 to rotate.

For example, a method of forming gear teeth in an inner circumferential surface of the rotation table 20, arranging a circular gear engaged with the gear teeth in an upper or lower portion of the support frame 10, and connecting the driving motor 12 to the gear may be used.

As illustrated in FIGS. 9 and 10, the mold connection member 30 having one side connected to the rotation table 20 to rotate together with the rotation table 20.

The mold connection member 30 has the other side protruding in an outward direction of the rotation table 20, and a plurality of mold connection members 30 are arranged radially around a center of the rotation table 20.

In the drawing, the other side of the mold connection member 30 includes two frames disposed in parallel so that two molds 40 are mounted thereto. Since socks typically include a pair of socks (two socks for left and right feet), the two frames are provided so that one pair of socks are manufactured at once.

As illustrated in FIG. 9, the mold 40 has one side connected with the mold connection member 30 and an upper portion in which a fabric guide groove 43a in which the fabric 3 with the gripping member 2 bonded is seated is formed, so that the sock main body 1 is fit to the mold 40.

In case that the fabric guide groove 43a is formed in the mold 40, the mold 40 arranges the fabric 3 to which the plurality of gripping members 2 are bonded at an exact position when the gripping member 2 is bonded to the inside of the sock to increase a bonding position accuracy of the gripping member 2.

However, when a numeric value of a sum of a height of the fabric 3 and a height of the gripping member 2 is less than that of a depth of the fabric guide groove 43a, the gripping member 2 may not be bonded to the sock main body 1 through the press.

Furthermore, in case that the fabric guide groove 43a has a low depth, a phenomenon in which the fabric 3 is bonded to an inner circumferential surface of the sock when the sock is fitted to the mold 40 to move a position that is not a bonding target position is generated.

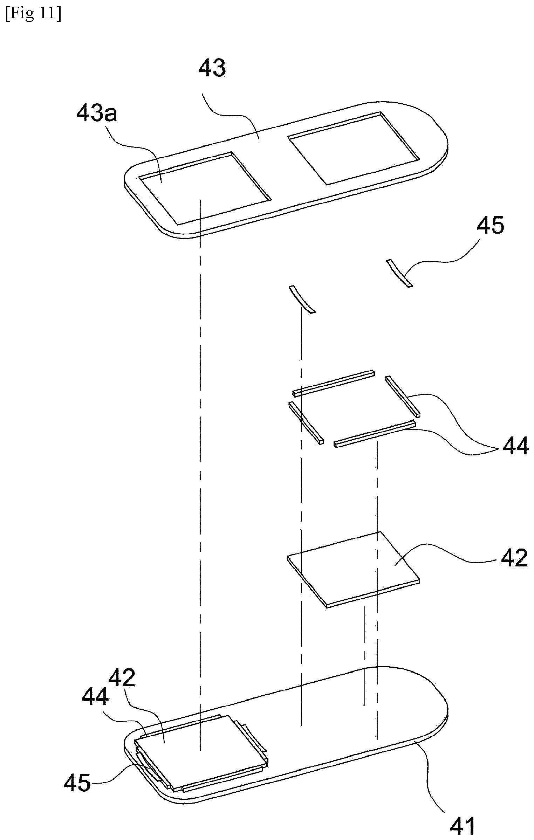

To restrict the above-described phenomenon, the mold 40 may include a connection plate 41, a seat member 42, and an elevation member 43 as illustrated in FIG. 11.

The connection plate 41 has an overall shape and a size, which correspond to an approximately foot shape so that the socks fit tight.

The seat member 42 may be installed on the connection plate 41, and the fabric 3 with gripping member 2 bonded is seated on the seat member 42.

Also, the elevation member 43 is configured such that the fabric guide groove 43a through which the seat member 42 passes is defined therein, and a lower portion thereof is connected to the connection plate 41 through an elastic member 44 to vertically move by an upper pressure.

Here, the elastic member 44 may be made of flexible foam such as a sponge. The elastic member 44 may be made of a material that is preferably resistant to heat and has a restoration force that is not weakened when a pressure is applied.

In order to prepare a case in which the restoration force of the elastic member 44 is reduced by receiving a repeated compressive force or by a thermal damage, a plate spring 45 having both rounded ends and made of a metal material may be further installed between the connection plate 41 and the elevation member 43 as illustrated in the drawing.

In case that the mold 40 is configured as described above, since the fabric guide groove 43a may have a great depth, the fabric 3 may be restricted from being separated from the fabric guide groove 43a due to a friction of the inner circumferential surface of the sock main body 1 when the socks are fitted to the mold 40 after the fabric 3 is inserted to the fabric guide groove 43a.

Also, when a pressing operation is performed, a height of the elevation member 43 may be lowered, and thus the press may easily compress the gripping member 2.

Here, when a thickness of the gripping member 2 is varied according to the kind of the socks, or the elevation member 43 is not easily restored due to a damage of the elastic member 44, a height of the seat member 44 may be lowered to be simply and continuously used.

That is, the seat member 42 may adjust a height from the connection plate 41.

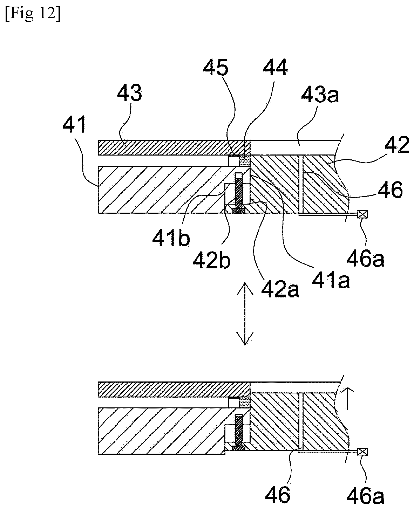

More specifically, as illustrated in FIG. 12, a through-hole 41a that is vertically perforated is formed to form the fabric guide groove 43a in the elevation member 43, and a stepped portion 41b obtained by bending a middle portion of an inner wall of the through hole 41a in an outward horizontal direction is formed.

Here, the seat member 42 may be configured to adjust a height of a bottom thereof such that the seat member 42 has an upper portion inserted to the through-hole 41a and a lower portion forming a protruding portion 42a protruding in the outward horizontal direction, and an adjusting bolt 42b screw-coupled to the stepped portion 41b is formed to pass through the protruding portion 42a.

Also, as illustrated in FIG. 12, in order to further restrict the phenomenon in which the fabric 3 is bonded to the sock main body 1 due to friction or an electrostatic phenomenon, a suction hole 46 may be formed on the seat member 42, and a suction pump 46a connected to the suction hole 46 through a hose or the like may be provided.

In case that the suction pump 46a is operated when the socks are fitted to the mold 40 after the suction pump 46a is installed, and the fabric 3 is inserted to the fabric guide groove 43a, a phenomenon in which the fabric 3 is suctioned to the sock main body 1 by an air suction force may be further restricted.

Also, when the suction pump 46a is turned on and off in a short frequency after the pressing operation is finished, the fabric 3 may be easily detached from the gripping member 2, and when the suction pump 46a is operated in a state in which the fabric 3 is placed by using the guide device 60 to bond the gripping member 2 to an outside of the sock main body 1, and the rotation table 20 rotates toward a next press device, the fabric 3 disposed on the sock main body 1 may not be easily separated from the sock main body 1.

To this end, a plurality of suction holes 46 may be defined although only one suction hole 46 is illustrated in the drawing.

The press device 50 includes a typical heat press and is installed adjacent to one side of the support frame 10. Specifically, the press device 50 includes: a lower mold 50a for supporting a lower portion of the mold 40; and an upper mold 50b spaced upward from the lower mold 50a, including a heating wire 50c installed therein, and connected with an actuator 50d to vertically move and press an upper portion of the mold 40, thereby heating and pressing the sock main body 1 fitted to the mold 40, so that the gripping member 2 is bonded to the sock main body 1.

More specifically, the press device 50 includes one side press device 51 for heating and pressing to bond the gripping member 2 to the inside of the sock main body 1 and the the other side press device 52 for heating and pressing to bond the gripping member 2 to the outside of the sock main body 1.

The two press devices are disposed as illustrated in FIGS. 9 and 10. That is, the one side press device 51 is disposed in one side direction along a circumference of the support frame 10 with respect to the guide device 60 to heat and press the fabric 3 disposed between the sock main body 1 and the mold 40.

The the other side press device 52 is disposed in the other side direction along the circumference of the support frame 10 with respect to the guide device 60 to heat and press the fabric 3 disposed outside the sock main body 1 fitted to the mold 40

Here, in case that the sock main body 1 has a small thickness or is easily damaged by heat, a phenomenon in which the sock main body 1 is damaged is generated when heated and pressed for a long time at once.

In order to prevent this phenomenon, the one side press device 51 may include a first one side press device 51a and a second one side press device 51b, and the the other side press device 52 may include a first the other side press device 52a and a second the other side press device 52b as illustrated in the drawing.

In a plan view of FIG. 10, since the first one side press device 51a and the second one side press device 51b are spaced a predetermined angle from each other with respect to a center of the support frame 10, the sock main body 1 is cooled while the mold 40 moves from the first one side press device 51a to the second one side press device 51b.

The first the other side press device 52a and the second the other side press device 51b of the the other side press device 52 have a predetermined angle therebetween as illustrated in the drawing, the angle therebetween is two times greater than that between the first one side press device 51a and the second one side press device 51b with respect to the center of the support frame 10.

Since the first the other side press device 52a heats and presses the gripping member 2 through the fabric 3 instead of directly heating and pressing the gripping member 2, the first the other side press device 52a has a long heating time and a higher heating temperature than the one side press device 51. In this case, since the sock main body 1 may be damaged, the fabric 3 is separated after a temporary bonding is firstly performed and before a main bonding is secondarily performed.

Here, although the fabric 3 may be manually separated, as illustrated in FIG, 14, a suction hole 50d may be formed in the upper mold 50b of the first the other side press device 52a, and a suction pump 50e connected to the suction hole 50d through a pipe may be provided in order to improve a productivity.

In this case, when the upper mold 50b moves upward after the pressing is finished, a suction force to the fabric 3 may be generated, so that the gripping member 2 and the fabric are easily detached.

In addition, although not shown, a blower for blowing the fabric 3 in a side direction to prevent the fabric 3 from falling to an upper portion of the lower mold 50a when an operation of the suction pump 50e is stopped.

As illustrated in FIGS. 9 and 10, the guide device 60 is installed adjacent to one side of the support frame 10 and arranges the fabric 3 at an exact position of the outside of the sock main body 1.

Specifically, the guide device 60 includes a movable frame 61 that vertically moves toward the mold 40 with the sock main body 1 fitted, and a fabric guide member 62 in which a guide hole 62a is formed and which guides an arrangement position of the fabric 3 on the sock main body 1fitted to the mold 40 is installed on the movable frame 61.

As the movable frame 61 moves downward when the mold 40 is disposed below the guide device 60, and the fabric guide member 62 is disposed above the sock main body 1 by the downward movement of the movable frame 61, a worker inputs the fabric 3 through the guide hole 62a above the sock main body 1, so that the fabric 3 is disposed at the exact position.

Also, as the movable frame 61 moves upward in order to perform a next process, and the rotation table 20 rotates, so that the mold 40 moves to the the other side press device 52, the gripping member 2 at the outside of the sock main body 1 is heated and pressed.

As illustrated in FIG. 10, since the fabrics are sequentially cut from one roll, and the gripping members 2 on the continuous fabric 3 are alternately arranged along a longitudinal direction thereof, the gripping members 2 disposed on the inner circumferential surface and the outer circumferential surface of the sock main body 1 may be alternately arranged in position.

When the fabric 3 remained after the gripping member 2 is bonded to the sock main body 1 in the above-described configuration is detached and removed, the gripping member 2 is firstly temporarily bonded to the sock main body 1 and then detached in the first the other side press device 52a in case of the outer circumferential surface of the sock main body 1, and the fabric at the inside of the sock main body 1 is taken out and removed after the outside press process is finished in case of the inner circumferential surface of the sock main body 1.

According to the above-described configuration, as a plurality of gripping members 2 are arranged with a predetermined gap in a horizontal direction and a vertical direction on each of the fabrics 3 installed on the inside of the sock main body 1 and the fabrics 3 installed on the outside of the sock main body 1 on a plane, one group of grapping members 2 forming one horizontal line may be arranged alternately with one group of grapping members 2 adjacent thereto in the vertical direction, and the gripping members 2 disposed at the inside of the sock main body 1 and the gripping members 2 disposed at the outside of the sock main body 1 may be alternately arranged on the plane.

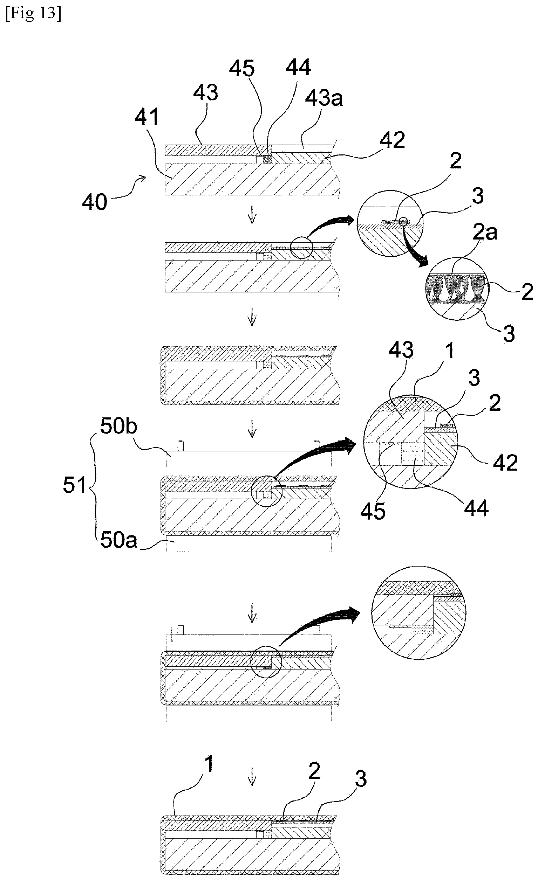

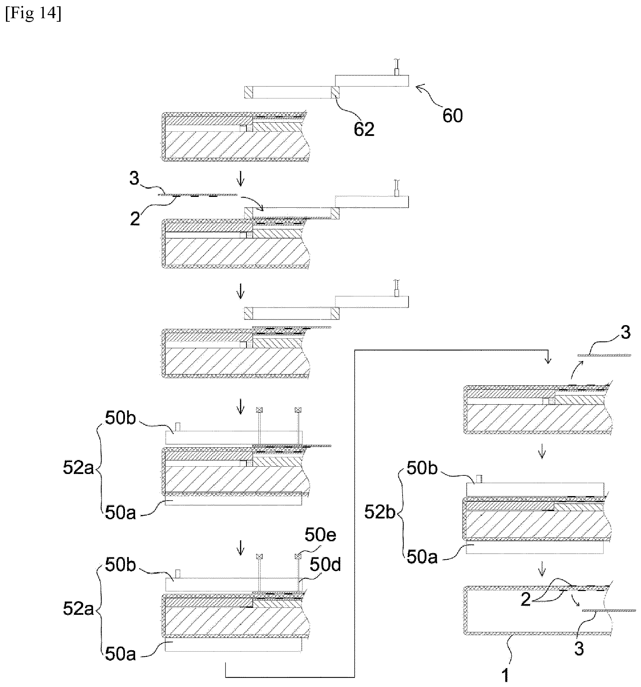

The above-described configuration of the present invention is illustrated in FIGS. 13 and 14.

FIG. 13 is a view illustrating a process of bonding the gripping member 2 to the inside of the sock main body 1, and FIG. 14 is a view illustrating a process of bonding the gripping member 2 to the outside of the sock main body 1.

As described above, the present invention may exactly and alternately arrange the gripping members 2 on the inside and the outside of the sock main body 1 and have the improved working speed to provide the sock having the excellent non-slip function to various consumers in addition to sports athletes of a specific game.

### INDUSTRIAL APPLICABILITY

The method for manufacturing the non-slip socks according to the present invention may be applied to manufacturing of various footwears such as sports socks, daily socks, summer socks, winter socks, outer socks, and stockings.

**[Description of symbols]**

| | | | |
|---|---|---|---|
| 1: | Sock main body | 2: | Grapping member |
| 2a: | Hot-melt adhesive | 2b: | Column cell |
| 2c: | Non-slip groove | 3: | Fabric |
| 10: | Support frame | 11: | Guide groove |
| 12: | Driving motor | 20: | Rotation table |
| 30: | Mold connection member | 40: | Mold |
| 41: | Connection plate | 41a: | Through-hole |
| 41b: | Stepped portion | 42: | Seat member |
| 42a: | Protruding portion | 42b: | Adjusting bolt |
| 43: | Elevation member | 43a: | Fabric guide groove |
| 44: | Elastic member | 45: | Plate spring |
| 46: | Suction hole | 46a: | Suction pump |
| 50: | Press device | 50a: | Lower mold |
| 50b: | Upper mold | 50c: | Heating wire |
| 50d: | Suction hole | 50e: | Suction pump |
| 51: | One side press device | 51a: | First one side press device |
| 51b: | Second one side press device | 52: | The other side press device |
| 52a: | First the other side press device | 52b: | Second the other side press device |
| 60: | Guide device | 61: | Movable frame |
| 62: | Fabric guide member | 62a: | Guide hole |

## Claims

1. A method for manufacturing non-slip socks, which arranges a gripping member (2) on a surface of a sock main body (1) fitted to a mold and presses and bonds the gripping member (2) to the surface of the sock main body (1) by using a press, the method comprising:
an inside setting process of preparing a mold (40) in which a fabric guide groove (43a), in which a fabric (3) onto which a grapping member is bonded is to be seated, is formed and then seating the fabric (3) in the fabric guide groove (43a), wherein the grapping member (2) faces upward;
a sock installation process of fitting the sock main body (1) to the mold (40) on which the fabric (3) is seated so that the grapping member (2) faces an inner circumferential surface of the sock main body (1);
an inside press process of preparing an one side press device (51) comprising a lower mold (50a) configured to support a lower portion of the mold (40), an upper mold (50b) spaced upward from the lower mold (50a), a heating wire (50c) installed in one of the lower mold (50a) and the upper mold (50b), and an actuator (50d) connected to the upper mold (50b), arranging one side of the mold (40) between the lower mold (50a) and the upper mold (50b), and then allowing the upper mold (50b) to move downward to heat and press the sock main body (1), so that the grapping member (2) at the inside of the sock main body (1) is bonded to the inside of the sock main body (1);
an outside setting process of preparing a guide device (60) comprising a movable frame (61) that moves upward toward the mold (40), wherein a fabric guide member (62) in which a guide hole (62a) configured to guide an arranged position of the fabric (3) on the sock main body (1) fitted to the mold (40) is formed is installed on the movable frame (61), and then arranging the fabric guide member (62) above the sock main body (1) and inputting another fabric (3) to which the grapping member (2) is bonded to the guide hole (62a), so that the grapping member (2) is disposed below the fabric (3); and
an outside press process of preparing a the other side press device (52) comprising a lower mold (50a) configured to support the lower portion of the mold (40) and an upper mold (50b) spaced upward from the lower mold (50a), comprising a heating wire (50c) installed therein, and connected with an actuator to vertically move, arranging one side of the mold (40) between the lower mold (50a) and the upper mold (50b), and then allowing the upper mold (50b) to move downward to heat and press the grapping member (2) on the sock main body (1), thereby bonding the grapping member (2) disposed on an outer surface of the sock main body (1) to the outer surface of the sock main body (1),
wherein the mold (40) comprises:
a connection plate (41);
a seat member (42) installed on the connection plate (41) and on which the fabric (3) to which the gripping member (2) is bonded is seated; and
an elevation member (43) in which a fabric guide groove (43a) through which the seat member (42) passes is formed therein and having a lower portion connected with the connection plate (41) through an elastic member (44) to vertically move by an upper pressure, so that the fabric (3) is not deviated from the fabric guide groove (43a) in a state in which the fabric (3) is inserted to the fabric guide groove (43a) after the inside setting process is finished.

2. The method of claim 1, wherein a plurality of grapping members (2) are arranged with a predetermined gap in a horizontal direction and a vertical direction on each of the fabrics (3) installed on the inside of the sock main body (1) and the fabrics (3) installed on the outside of the sock main body (1) on a plane, one group of grapping members (2) forming one horizontal line is arranged alternately with one group of grapping members (2) adjacent thereto in the vertical direction, and the gripping members (2) disposed at the inside of the sock main body (1) and the gripping members (2) disposed at the outside of the sock main body (1) are alternately arranged on the plane.

3. The method of claim 1, wherein the one side press device (51) comprises a first one side press device (51a) and a second one side press device (51b), which are spaced apart from each other, and
the inside press process firstly temporarily bonds the grapping member (2) to an inner circumferential surface of the sock main body (1) in the first one side press device (51a) and then secondarily completely bonds the grapping member (2) to the inner circumferential surface of the sock main body (1) in the second one side press device (51b).

4. The method of claim 3, wherein the the other side press device (52) comprises a first the other side press device (52a) and a second the other side press device (52b), which are spaced apart from each other, and
the outside press process firstly temporarily bonds the grapping member (2) to an outer circumferential surface of the sock main body (1) in the first the other side press device (52a) and then secondarily completely bonds the grapping member (2) to the outer circumferential surface of the sock main body (1) in the second the other side press device (52b).
